# EUROPEAN PATENT SPECIFICATION

(11) **EP 4 570 662 B1**
(45) Date of publication and mention of the grant of the patent: **09.09.2026**
(21) Application number: 24218424.0
(22) Date of filing: 09.12.2024
(51) Int. Cl.: B64D 11/06

(54) **SYSTEMS AND METHODS FOR MONITORING SEATING IN AN AIRCRAFT**
SYSTEME UND VERFAHREN ZUR SITZÜBERWACHUNG IN EINEM FLUGZEUG
SYSTÈMES ET PROCÉDÉS DE SURVEILLANCE DE SIÈGE DANS UN AÉRONEF

(30) Priority: 12.12.2023 IN 202341084675; 15.10.2024 US 202418915812
(43) Date of publication of application: 18.06.2025
(73) Proprietor: B/E Aerospace, Inc., Winston-Salem, NC 27105 (US)
(72) Inventor: SWAIN, Soumya Ranjan, 753014 Cuttack (IN); NEERAJ, Kumar, 560066 Bengaluru (IN)
(74) Representative: Dehns

(56) References cited:
- WO-A1-2017/176748
- GB-A- 2 496 452
- US-A1- 2022 315 225

## Description

### TECHNICAL FIELD AND BACKGROUND

The present disclosure relates generally to solutions for accurately monitoring seating in real-time during phases of flight, and more particularly, to a centralized controller configured to monitor various seating throughout a passenger cabin, and make seat position adjustments as necessary based on at least one of occupancy and phase of flight.

Aircraft such as business and private jets can include various furniture for seating and sleeping. Such furniture can include, but is not limited to, individual passenger seats and divans, each of which may be configured to adjust between different positions during different phases of flight. For example, passenger seats may be configured to transition between upright for taxi, take-off, and landing (TTOL) and lie flat during flight, through various intermediate positions, while divans may be configured to convert from passenger seats during TTOL to a bed during flight, through various lounge positions.

Passenger seats in particular may be highly adjustable. In some cases, highly adjustable seats may include more than a dozen actuators operable for adjusting one or more of the seat pan, backrest, leg rest, armrests, headrest, lumbar, etc., through various singular and coordinated movements. In some cases, seats may also be adjustable laterally, longitudinally, and rotationally with respect to other seats, aisles and furniture.

Aircraft are subject to different governmental regulations during different phases of flight, and particularly during TTOL where seating furniture is required to be positioned upright, passengers are required to be seated, and safety restraints are required to be used. At present, compliance with these requirements is performed by one or more of visual inspection of the cabin by the flight crew, and dedicated sensors positioned in the cabin. Drawbacks of the former include delayed responses to seat position issues, human error, and limited visibility to some seating, while drawbacks of the latter include the need for separate sensors and networking which add weight, cost, and complexity to the aircraft. Both solutions further require action by the flight crew to inform the passenger regarding seat position issues such that corrective action can be taken. Control of the position of passenger seats is disclosed in GB 2 496 452 A and US 2022/315225 A1.

To overcome the drawbacks of conventional monitoring solutions, what is needed is a seat monitoring solution that operates in real-time, during all phases of flight, without the need for external sensors, and without visual inspection by the flight crew.

### BRIEF SUMMARY

In one aspect, there is provided a system for monitoring seating in an aircraft as defined by claim 1.

In some embodiments, the at least one sensor is configured to report the determined occupancy state to the cabin controller, and the processing circuitry of the cabin controller is further configured to allow the local seat controller to operate the at least one actuator to move the at least one movable seat component to achieve a compliant seat component position when the occupancy state of the respective seat is determined to be unoccupied.

In some embodiments, the interactive digital display is configured to display a layout of the seats in the aircraft, display the at least one movable seat component for each seat, and differentiate graphically between compliant and non-compliant movable seat component positions.

In some embodiments, the phases of flight include at least two of pre-flight, taxi, take-off, climb, cruise, descent, approach, landing, taxi, and post-flight.

In some embodiments, the at least one movable seat component includes at least one of a backrest and a leg rest.

In some embodiments, each seat is an individual passenger seat or a divan.

In some embodiments, the processing circuitry of the cabin controller is further configured to issue an alert, broadcast by the interactive digital display, when the at least one movable seat component is determined to be non-compliant.

In some embodiments, the processing circuitry of the cabin controller is further configured to instruct all of the plurality of local seat controllers to operate their respective at least one actuator to move their respective at least one movable seat component to a predefined default position assigned to a predefined phase of the phases of flight.

In some embodiments, the predefined default position for each seat may be customizable.

In some embodiments, at least one of the seats is an individual passenger seat and at least one of the seats is a divan.

In embodiments, the cabin controller is positioned in the aircraft remote from the plurality of local seat controllers.

In a further aspect, embodiments of the inventive concepts disclosed herein are directed to a method for monitoring movable seat component positions in an aircraft passenger cabin as defined by claim 10.

This summary is provided solely as an introduction to subject matter that is fully described in the following detailed description and drawing figures. This summary should not be considered to describe essential features nor be used to determine the scope of the claims. Moreover, it is to be understood that both the foregoing summary and the following detailed description are explanatory only and are not necessarily restrictive of the subject matter claimed. The scope of protection is defined by the appended claims.

### BRIEF DESCRIPTION OF THE DRAWINGS

Implementations of the inventive concepts disclosed herein may be better understood when consideration is given to the following detailed description thereof. Such description refers to the included drawings, which are not necessarily to scale, and in which some features may be exaggerated and some features may be omitted or may be represented schematically in the interest of clarity. Like reference numerals in the drawings may represent and refer to the same or similar element, feature, or function. In the drawings:
FIG. 1 is a block diagram illustrating a system for monitoring seating in an aircraft, in accordance with example embodiments of this disclosure;
FIG. 2 is a table illustrating phases of flight and corresponding compliant seat component position, in accordance with example embodiments of this disclosure;
FIG. 3 is an illustration of a layout of seats in a monitored cabin and associated information; in accordance with example embodiments of this disclosure; and
FIG. 4 is a flow diagram illustrating processor implementation steps for monitoring the seating in an aircraft, in accordance with example embodiments of this disclosure.

### DETAILED DESCRIPTION

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of embodiments of the instant inventive concepts, numerous specific details are set forth in order to provide a more thorough understanding of the inventive concepts. However, it will be apparent to one of ordinary skill in the art having the benefit of the instant disclosure that the inventive concepts disclosed herein may be practiced without these specific details. In other instances, well-known features may not be described in detail to avoid unnecessarily complicating the instant disclosure. The inventive concepts disclosed herein are capable of other embodiments or of being practiced or carried out in various ways. Also, it is to be understood that the phraseology and terminology employed herein is for the purpose of description and should not be regarded as limiting.

As used herein, a letter following a reference numeral is intended to reference an embodiment of the feature or element that may be similar, but not necessarily identical, to a previously described element or feature bearing the same reference numeral (e.g., 1, 1a, 1b). Such shorthand notations are used for purposes of convenience only, and should not be construed to limit the inventive concepts disclosed herein in any way unless expressly stated to the contrary.

Further, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of embodiments of the instant inventive concepts. This is done merely for convenience and to give a general sense of the inventive concepts, and "a" and "an" are intended to include one or at least one and the singular also includes the plural unless it is obvious that it is meant otherwise.

Finally, as used herein any reference to "one embodiment" or "some embodiments" means that a particular element, feature, structure, or characteristic described in connection with the embodiment is included in at least one embodiment of the inventive concepts disclosed herein. The appearances of the phrase "in some embodiments" in various places in the specification are not necessarily all referring to the same embodiment, and embodiments of the inventive concepts disclosed may include one or more of the features expressly described or inherently present herein, or any combination of sub-combination of two or more such features, along with any other features which may not necessarily be expressly described or inherently present in the instant disclosure, insofar as they fall within the scope of the appended claims.

Broadly, embodiments of the inventive concepts disclosed herein are directed to systems and methods for monitoring seats in a passenger cabin, for instance a passenger cabin in a business or private jet. In embodiments, the system includes a cabin controller communicatively coupled to a plurality of local seat controllers. The cabin controller may be positioned remote from the local seat controllers, for instance in a crew area along with other cabin control and monitoring systems. The cabin controller may include an interactive digital display in which the seat layout is displayed graphically along with seat component positions as they exist in real-time, and with other information associated with the seat monitoring.

In use, the system may operate to reconcile seat positions with a current phase of flight, and more specifically, monitor seat component positions to determine compliance according to a current phase of flight. For example, a take-off phase of flight may have predefined seat component positions for each of the seats in the layout and the system operates to ensure that the movable seat components are each in a compliant position for take-off. Seat components determined to be non-compliant may be moved to a compliant position, at the request of a user through the operation of the cabin controller. Seats may include individual passenger seats, divans, beds, and any other furniture configured for seating and including at least one adjustable seat component. Seat component movements may be actuator driven by instructions received from the local seat controller.

In embodiments, the ability to adjust the seat component positions from the central cabin controller may be used to move non-compliant seat components to a compliant position, reset all seat components to their default positions, reset all seats to individually customized seat positions corresponding to a phase of flight, and for other purposes. In embodiments, seat component positions may be controlled to ensure compliance for safety for a particular phase of flight, or according to customer preference for a particular phase of flight.

Passenger seat may be highly adjustable and include a plurality of actuator driven movable seat components including, but not limited to, a seat bottom, a backrest, a headrest, a leg rest, armrests, lumbar, and bolsters. Seats may also be adjustable in terms of their lateral, longitudinal, and rotational position. For instance, a seat may be adjustable between an upright sitting position for TTOL and a lie flat position during flight and/or may be configured to rotate to change the seat angle. A divan may be adjustable, for example, between passenger seats and a bed through lounge sitting positions.

In embodiments, each individual actuator may drive seat component adjustment by, for example, rotational and/or linear motion. Actuators may be independent or dependent, wherein an independent actuator operates as a primary driver and a dependent actuator operates considering the operation of its respective independent actuator(s). Actuators may move at different speeds, and may operate separately or in groups to achieve preset sitting positions. Actuators may also be controlled independently. Each local seat controller may be configured with processing circuitry configured to execute independent seat components or coordinated seat motions by way of motion planning whereby actuators are coordinated to transition the seat between different predefined sitting positions. For example, one motion plan may transition the seat from upright to flat bed, whereas another motion plan may transition the seat from upright to cradle recline. In embodiments, motion plans may consider the available actuators and their performance capabilities in order to program a plan to transition the seat in a smooth, timely, ergonomic, and orchestrated manner.

Seat component movements may be further controlled in terms of sequence and speed, as different passengers may have different preferences as to how a seat transitions when occupied, and also the speed at which the seat transitions. For example, some passengers may feel more comfortable with a slow transition between extreme sitting positions, e.g., full upright to full flat bed, whereas other passengers may be comfortable with faster transitions. A seat component is moved at a slower rate of speed when the seat is determined to be occupied so as not to disturb or be perceptible to the seat occupant than when the seat is determined to be unoccupied.

In some embodiments, each local seat controller may be communicatively coupled to at least one sensor and may utilize outputs from the sensors to adjust a motion plan of the seat. Each local seat controller is communicatively coupled to the at least one sensor and is configured to determine the occupancy state of the seat. For example, seat component motions may be adjustable to account for transient objects entering and exiting their travel path.

In embodiments, the current position of a movable seat component corresponds to a definite actuator position for the involved actuator(s). For example, a first definite position of an involved actuator (e.g., leg rest actuator) may correspond to a first position of the leg rest (e.g., stowed), whereas a second definite position of the same actuator may correspond to a different position of the leg rest (e.g., deployed), while intermediate definite positions of the involved actuator may correspond to the different way points along the motion path for achieving the transition from the first position to the second position. The present state of the movable seat component may be determined by the local seat controller from the current definite position of the involved actuator(s). The local seat controller operates to access the current definite actuator positions of the movable seat components, operate the actuators to move each actuator to a different actuator position along the motion path, and report the actuator positions to the cabin controller continuously or on an on-demand basis.

In embodiments, the seating environment is monitored by at least one sensor. The at least one sensor may be positioned in the seat itself to detect weight to determine the occupancy state, or in the immediate seat environment. In some embodiments, the at least one sensor may be positioned apart/separate from the seat, for instance overhead with respect to the seat such that the field of view of the at least one sensor includes at least the seat. In some embodiments, the at least one sensor may include a camera or other vision sensor configured to output images of the seat and its immediate environment. In use, the at least one sensor may be configured to monitor the physical seat components and the seat occupant. In some embodiments, the camera may capture frames to determine object and seat component movements.

In some embodiments, each of the local seat controllers and the cabin controller are configured to receive, determine, instruct, execute, etc. Each may include at least one processor, memory, and a communication interface, wherein the processor provides processing functionality for at least the respective controller and may include any number of processors, micro-controllers, circuitry, field programmable gate array (FPGA) or other processing systems, and resident or external memory for storing data, executable code, and other information accessed or generated by respective controller. The processor may execute one or more software programs embodied in a non-transitory computer readable medium (e.g., memory) that implements techniques described herein. The processor is not limited by the materials from which it is formed, or the processing mechanisms employed therein and, as such, can be implemented via semiconductor(s) and/or transistors (e.g., using electronic integrated circuit (IC) components), and so forth.

The memory may be an example of tangible, computer-readable storage medium that provides storage functionality to store various data and/or program code associated with operation of the processor, such as software programs and/or code segments, or other data to instruct the processor, and possibly other components of the controller, to perform the functionality described herein. Thus, the memory can store data, such as a program of instructions for operating the respective controller, including its components (e.g., processor, communication interface, etc.), and so forth. It should be noted that while a single memory is described, a wide variety of types and combinations of memory (e.g., tangible, non-transitory memory) may be employed. The memory may be integral with the processor, may comprise stand-alone memory, or may be a combination of both. Some examples of the memory may include removable and non-removable memory components, such as random-access memory (RAM), read-only memory (ROM), flash memory (e.g., a secure digital (SD) memory card, a mini-SD memory card, and/or a micro-SD memory card), solid-state drive (SSD) memory, magnetic memory, optical memory, universal serial bus (USB) memory devices, hard disk memory, external memory, and so forth.

The communication interface may be operatively configured to communicate with components of the respective controller. For example, the communication interface may be configured to retrieve data from the processor or other devices, transmit data for storage in the memory, retrieve data from storage in the memory, and so forth. The communication interface may also be communicatively coupled with the processor to facilitate data transfer between components of the respective controller and the processor. It should be noted that while the communication interface is described as a component of the respective controller, one or more components of the communication interface may be implemented as external components communicatively coupled to the respective controller via a wired and/or wireless connection. The respective controller may also include and/or connect to one or more input/output (I/O) devices (e.g., human machine interface (HMI) devices) via the communication interface. In embodiments, the communication interface may include a transmitter, receiver, transceiver, physical connection interface, or any combination thereof.

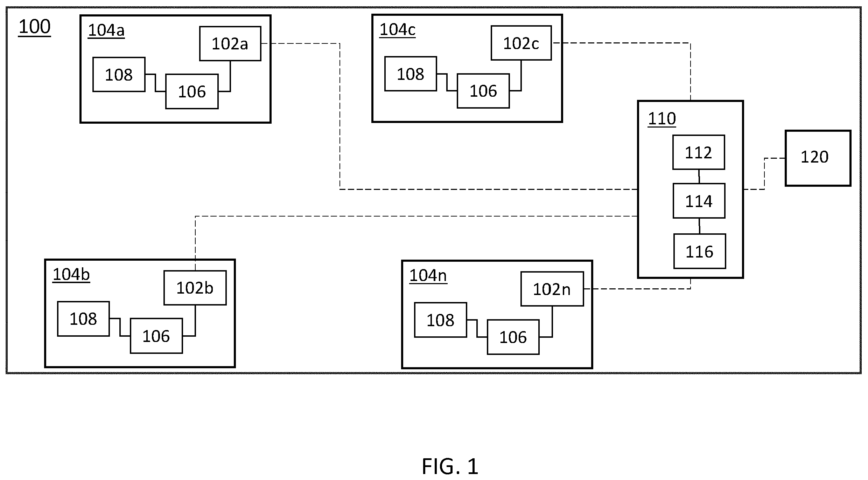

FIG. 1 is a block diagram illustrating a system 100 for monitoring seating in an aircraft, for instance a layout of different types of seats (e.g., individual passenger seats and divans) in a cabin of a business or private jet. In embodiments, the system 100 includes a plurality of local seat controllers 102a, 102b, 102c...102n, wherein each local seat controller is associated with a seat 104a, 104b, 104c...104n and is communicatively coupled to at least one actuator 106 mechanically coupled to at least one movable seat component 108. As discussed above, movable seat components can include, but are not limited to, a seat bottom, backrest, leg rest, armrests, frame members, swivel mechanism, etc. In embodiments, different seats may have different configurations and adjustabilities and therefore may be equipped with different movable seat components. For example, an individual passenger seat may be highly adjustable whereas a divan may adjust between seats and a bed.

The system 100 further includes a cabin controller 110 communicatively coupled to each of the plurality of local seat controllers 102a, 102b, 102c...102n. The cabin controller 110 may be positioned remote from the seats, for instance in a crew area of the cabin separated from the seats. In embodiments, the cabin controller 110 includes an interactive digital display 112, a memory 114, and a processor 116 including processing circuitry configured to execute machine-readable instructions stored to a non-transitory computer readable medium as discussed above.

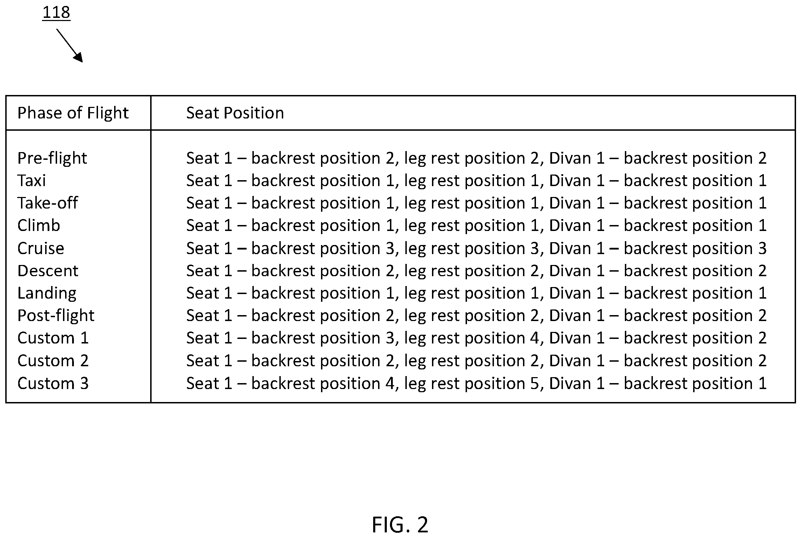

FIG. 2 illustrates a look-up table 118 stored in the memory of the cabin controller 110, or elsewhere, which includes information pertaining to allowable seat component positions corresponding to phases of flight. In embodiments, a current phase of flight may be received from an aircraft system such as a phase of flight selector. Phases of flight may include, but are not limited to, pre-flight, taxi, take-off, climb, cruise, descent, landing, and post-flight. Certain ones of the phases may be customizable, for instance those that are not safety critical for the passengers such as pre-flight and post-flight, and in some instances cruise. Each predefined phase of flight may have predefined positions for each of the movable seat components, for instance stowed seat components and upright and forward facing sitting positions for TTOL may be indicated by a first position number, whereas other seat positions may be indicated by a second position, and passenger preferred seat positions may be indicated by yet a different position number.

With continued reference to FIG. 1, the processor 116 of the cabin controller 110 is configured to receive, from each of the plurality of local seat controllers 102a, 102b, 102c...102n, positional information from the at least one actuator 106 determinative of positional information of the at least one movable seat component 108, and receive, from a flight phase selector 120, a current phase of flight. The processor 116 is further configured to determine for each seat 104a, 104b, 104c...104n, from the received positional information from the at least one actuator 106 and the received current phase of flight, movable seat position compliance or non-compliance. The processor 116 is further configured to cause the interactive digital display 112 to display for each seat the determined movable seat component compliance or non-compliance. For each seat having a movable seat component 108 determined to be non-compliant, the processor 116 is further configured to instruct, through the interactive digital display 112, the respective local seat controller to operate the at least one actuator to move the at least one movable seat component to achieve a compliant seat component position.

Each seat includes at least one sensor 122, positioned in the seat or environment, configured to sense an occupancy state of the respective seat. In such embodiments, the local seat controller 102a, 102b, 102c...102n is communicatively coupled to the at least one sensor 122 and is configured to determine the occupancy state of the seat and report the determined occupancy state to the cabin controller 110. In embodiments, the processing circuitry of the cabin controller 110 is further configured to allow the local seat controller 102a, 102b, 102c...102n to operate the at least one actuator 106 to move the at least one movable seat component 108 to achieve a compliant seat component position when the occupancy state of the respective seat is determined to be unoccupied.

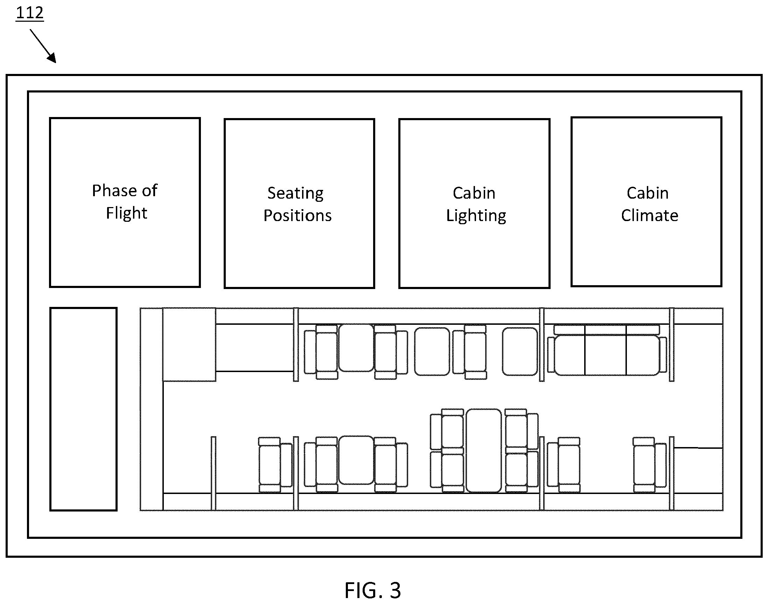

FIG. 3 illustrates the graphical display of the interactive digital display 112. In embodiments, the interactive digital display 112 is configured to display a layout of the seats in the aircraft having adjustment capability, display the at least one movable seat component for each seat, and differentiate graphically between compliant and non-compliant movable seat component positions. In embodiments, differentiation may be indicated by showing real-time positions of the seat components, graphics, color-coding, etc., to draw attention to the non-compliant seat components thereby alerting the flight crew to their non-compliant state. In embodiments, the processing circuitry of the cabin controller may be further configured to issue an alert, broadcast by the interactive digital display, audible alert, etc., when the at least one movable seat component is determined to be non-compliant. In addition to the current seat layout, the interactive digital display 112 may show other information and cabin controls such as phase of flight, possible seating positions corresponding to the phase of flight, cabin lighting, cabin climatization, among others. The interactive digital display 112 may include navigable menus and include touch screen functionality.

In embodiments, the processing circuitry of the cabin controller 110 is further configured to instruct all of the plurality of local seat controllers 102a, 102b, 102c...102n to operate their respective at least one actuator 106 to move their respective at least one movable seat component 108 to a predefined default position assigned to a predefined phase of flight. For example, to ready the passenger cabin during pre-flight, the cabin controller 110 may be used by the flight crew to input a command to instruct the local seat controllers 102a, 102b, 102c...102n to operate their respective actuators to move their respective seat components to an appropriate position for taxi and take-off. In another example, the cabin controller 110 may be configured to instruct all of the plurality of local seat controllers 102a, 102b, 102c...102n to operate their respective at least one actuator 106 to move their respective at least one movable seat component 108 to a predefined position based on customer preference and historical data. For example, while in pre-flight or post-flight, the cabin controller 110 may be used by the flight crew to input a command to instruct the local seat controllers 102a, 102b, 102c...102n to operate their respective actuators to set up the cabin seating, or portions thereof, for conferencing, entertaining, dining, sleeping, etc. Thus, referring again to FIG. 2, the table may include phases of flight where the seats component positions are entirely customizable.

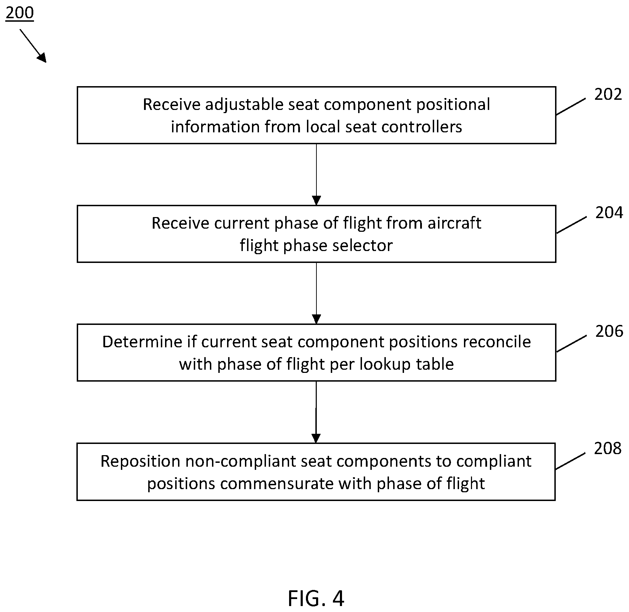

FIG. 4 is a flow diagram 200 illustrating processor implementation steps for monitoring the movable seat component positions in an aircraft passenger cabin including a plurality of local seat controllers each associated with a seat and communicatively coupled to at least one actuator mechanically coupled to at least one movable seat component. In step 202, the method includes receiving, from each of the plurality of local seat controllers, positional information from the at least one actuator determinative of positional information of the at least one movable seat component. In a step 204, the method includes receiving, from a flight phase selector, a current phase of flight. In a step 206, the method includes determining for each seat, from the received positional information from the at least one actuator and the received current phase of flight, movable seat position compliance or non-compliance. In a step 208, for each seat having a movable seat component determined to be non-compliant, the method includes instructing the respective local seat controller to operate the at least one actuator to move the at least one movable seat component to achieve a compliant seat component position. In embodiments, the method is performed by the cabin controller communicatively coupled to the plurality of local seat controllers as described above.

It is to be understood that embodiments of the methods according to the inventive concepts disclosed herein may include one or more of the steps described herein. Further, such steps may be carried out in any desired order and two or more of the steps may be carried out simultaneously with one another. Two or more of the steps disclosed herein may be combined in a single step, and in some embodiments, one or more of the steps may be carried out as two or more sub-steps. Further, other steps or sub-steps may be carried in addition to, or as substitutes to one or more of the steps disclosed herein.

From the above description, it is clear that the inventive concepts disclosed herein are well adapted to achieve the objectives and to attain the advantages mentioned herein as well as those inherent in the inventive concepts disclosed herein. While presently preferred embodiments of the inventive concepts disclosed herein have been described for purposes of this disclosure, it will be understood that numerous changes may be made which will readily suggest themselves to those skilled in the art and which are accomplished within the scope of the invention as defined by the claims.

## Claims

1. A system for monitoring seating in an aircraft, comprising:
a plurality of seats (104a, 104b, ...,104n);
a plurality of local seat controllers (102a, 102b,...,102n), each local seat controller associated with a respective seat (104a, 104b,...,104n) of the plurality of seats and communicatively coupled to at least one actuator (106) mechanically coupled to at least one movable seat component (108); and
a cabin controller (110) communicatively coupled to the plurality of local seat controllers, the cabin controller including an interactive digital display (112), a memory (114), and a processor (116), wherein:
a table (118) is stored in the memory of the cabin controller and includes information pertaining to compliant seat component positions corresponding to phases of flight; and
the processor includes processing circuitry configured to execute machine-readable instructions stored to a non-transitory computer readable medium, wherein the instructions, when executed by the processing circuitry, cause the processing circuitry to:
receive, from each of the plurality of local seat controllers, positional information from the at least one actuator determinative of positional information of the at least one movable seat component;
receive, from a flight phase selector, a current phase of flight;
determine for each seat, from the received positional information from the at least one actuator and the received current phase of flight, movable seat position compliance or non-compliance;
cause the interactive digital display to display for each seat the determined movable seat component compliance or non-compliance; and
for each seat having a movable seat component determined to be non-compliant, instruct, through the interactive digital display, the respective local seat controller to operate the at least one actuator to move the at least one movable seat component to achieve a compliant seat component position;
wherein:
each seat (104a, 104b,...,104n) includes at least one sensor (122) configured to sense an occupancy state of the respective seat;
the local seat controller is communicatively coupled to the at least one sensor and is configured to determine the occupancy state of the seat; and
**characterized in that** movement of the at least one movable seat component when the seat is determined to be occupied occurs at a slower rate than when the seat is determined to be unoccupied.

2. The system according to claim 1, wherein:
the local seat controller is configured to report the determined occupancy state to the cabin controller.

3. The system according to claim 2, wherein the interactive digital display (112) is configured to:
display a layout of the seats (104a, 104b,...,104n) in the aircraft;
display the at least one movable seat component (108) for each seat; and
differentiate graphically between compliant and non-compliant movable seat component positions.

4. The system according to any preceding claim, wherein the phases of flight include at least two of pre-flight, taxi, take-off, climb, cruise, descent, approach, landing, taxi, and post-flight.

5. The system according to any preceding claim, wherein the at least one movable seat component includes at least one of a backrest and a leg rest.

6. The system according to any preceding claim, wherein each seat is an individual passenger seat or a divan, and optionally wherein at least one of the seats is an individual passenger seat and at least one of the seats is a divan

7. The system according to any preceding claim, wherein the processing circuitry (116) of the cabin controller (110) is further configured to issue an alert, broadcast by the interactive digital display, when the at least one movable seat component is determined to be non-compliant.

8. The system according to any preceding claim, wherein the processing circuitry (116) of the cabin controller (110) is further configured to instruct all of the plurality of local seat controllers to operate their respective at least one actuator to move their respective at least one movable seat component to a predefined default position assigned to a predefined phase of the phases of flight, and optionally wherein the predefined default position for each seat is customizable.

9. The system according to any preceding claim, wherein the cabin controller (110) is positioned in the aircraft remote from the plurality of local seat controllers.

10. A method for monitoring movable seat component positions in an aircraft passenger cabin including a plurality of local seat controllers each associated with a seat and communicatively coupled to at least one actuator mechanically coupled to at least one movable seat component, the method comprising the steps of:
receiving, from each of the plurality of local seat controllers, positional information from the at least one actuator determinative of positional information of the at least one movable seat component;
receiving, from a flight phase selector, a current phase of flight;
determining for each seat, from the received positional information from the at least one actuator and the received current phase of flight, movable seat position compliance or non-compliance;
for each seat having a movable seat component determined to be non-compliant, instructing the respective local seat controller to operate the at least one actuator to move the at least one movable seat component to achieve a compliant seat component position;
wherein the method is performed by a cabin controller communicatively coupled to the plurality of local seat controllers, the cabin controller including an interactive digital display, a memory, and a processor, wherein a table is stored in the memory of the cabin controller and includes information pertaining to compliant seat component positions corresponding to phases of flight, and the processor includes processing circuitry configured to execute machine-readable instructions stored to a non-transitory computer readable medium; and
wherein the method further comprises:
sensing an occupancy state of the respective seat;
determining at the local controller of the seat whether the seat is occupied or unoccupied; and
**characterized in that** movement of the at least one movable seat component when the seat is determined to be occupied occurs at a slower rate than when the seat is determined to be unoccupied.

## Patentansprüche

1. System zur Sitzüberwachung in einem Flugzeug, umfassend:
eine Vielzahl von Sitzen (104a, 104b, ..., 104n);
eine Vielzahl von lokalen Sitzsteuerungen (102a, 102b, ..., 102n), wobei jede lokale Sitzsteuerung mit einem jeweiligen Sitz (104a, 104b, ..., 104n) der Vielzahl von Sitzen verknüpft und kommunikativ mit mindestens einem Aktuator (106) gekoppelt ist, der mechanisch mit mindestens einer bewegbaren Sitzkomponente (108) gekoppelt ist; und
eine Kabinensteuerung (110), die kommunikativ mit der Vielzahl von lokalen Sitzsteuerungen gekoppelt ist, wobei die Kabinensteuerung eine interaktive digitale Anzeige (112), einen Speicher (114) und einen Prozessor (116) beinhaltet, wobei:
eine Tabelle (118) in dem Speicher der Kabinensteuerung gespeichert ist und Informationen über vorschriftsmäßige Sitzkomponentenpositionen, die Flugphasen entsprechen, beinhaltet; und
der Prozessor eine Verarbeitungsschaltung beinhaltet, die konfiguriert ist, um maschinenlesbare Anweisungen, die in einem nichtflüchtigen computerlesbaren Medium gespeichert sind,
auszuführen, wobei die Anweisungen, wenn sie durch die Verarbeitungsschaltung ausgeführt werden, bewirken, dass die Verarbeitungsschaltung:
von jeder der Vielzahl von lokalen Sitzsteuerungen Positionsinformationen von dem mindestens einen Aktuator empfängt, die für Positionsinformationen der mindestens einen bewegbaren Sitzkomponente bestimmend sind;
eine aktuelle Flugphase von einem Flugphasenwähler empfängt;
für jeden Sitz anhand der von dem mindestens einen Aktuator empfangenen Positionsinformationen und der empfangenen aktuellen Flugphase die Vorschriftsmäßigkeit oder Nichtvorschriftsmäßigkeit einer Position des bewegbaren Sitzes bestimmt;
bewirkt, dass die interaktive digitale Anzeige für jeden Sitz die bestimmte Vorschriftsmäßigkeit oder
Nichtvorschriftsmäßigkeit der bewegbaren Sitzkomponente anzeigt; und
für jeden Sitz, aufweisend eine als nicht vorschriftsmäßig bestimmte bewegbare Sitzkomponente, durch die interaktive digitale Anzeige die jeweilige lokale Sitzsteuerung anweist, den mindestens einen Aktuator zu betätigen, um die mindestens eine bewegbare Sitzkomponente zu bewegen, um eine vorschriftsmäßige Sitzkomponentenposition zu erreichen;
wobei:
jeder Sitz (104a, 104b, ..., 104n) mindestens einen Sensor (122) beinhaltet, der konfiguriert ist, um einen Belegungszustand des jeweiligen Sitzes zu erfassen;
die lokale Sitzsteuerung kommunikativ mit dem mindestens einen Sensor gekoppelt ist und konfiguriert ist, um den Belegungszustand des Sitzes zu bestimmen; und
**dadurch gekennzeichnet, dass** eine Bewegung der mindestens einen bewegbaren Sitzkomponente, wenn bestimmt ist, dass der Sitz belegt ist, bei einer langsameren Rate erfolgt, als wenn bestimmt ist, dass der Sitz nicht belegt ist.

2. System nach Anspruch 1, wobei:
die lokale Sitzsteuerung konfiguriert ist, um der Kabinensteuerung den bestimmten Belegungszustand zu melden.

3. System nach Anspruch 2, wobei die interaktive digitale Anzeige (112) zu Folgendem konfiguriert ist:
Anzeigen einen Sitzplans (104a, 104b, ..., 104n) in dem Flugzeug;
Anzeigen der mindestens einen bewegbaren Sitzkomponente (108) für jeden Sitz; und
grafisches Unterscheiden zwischen vorschriftsmäßigen und nicht vorschriftsmäßigen Positionen einer bewegbaren Sitzkomponente.

4. System nach einem der vorhergehenden Ansprüche, wobei die Flugphasen mindestens zwei von Vorflug, Rollen, Start, Steigflug, Reiseflug, Sinkflug, Anflug, Landung, Rollen und Nachflug beinhalten.

5. System nach einem der vorhergehenden Ansprüche, wobei die mindestens eine bewegbare Sitzkomponente mindestens eines von einer Rückenlehne und einer Beinstütze beinhaltet.

6. System nach einem der vorhergehenden Ansprüche, wobei jeder Sitz ein individueller Fahrgastsitz oder ein Sofa ist, und wobei optional mindestens einer der Sitze ein individueller Fahrgastsitz ist und mindestens einer der Sitze ein Sofa ist.

7. System nach einem der vorhergehenden Ansprüche, wobei die Verarbeitungsschaltung (116) der Kabinensteuerung (110) ferner konfiguriert ist, um eine Warnung auszugeben, die über die interaktive digitale Anzeige verbreitet wird, wenn bestimmt wird, dass die mindestens eine bewegbare Sitzkomponente nicht vorschriftsmäßig ist.

8. System nach einem der vorhergehenden Ansprüche, wobei die Verarbeitungsschaltung (116) der Kabinensteuerung (110) ferner konfiguriert ist, um alle der Vielzahl von lokalen Sitzsteuerungen anzuweisen, deren jeweiligen mindestens einen Aktuator zu betätigen, um deren jeweilige mindestens eine bewegbare Sitzkomponente in eine einer vordefinierten Phase der Flugphasen zugeordnete vordefinierte Standardposition zu bewegen, und wobei die vordefinierte Standardposition optional für jeden Sitz individuell anpassbar ist.

9. System nach einem der vorhergehenden Ansprüche, wobei die Kabinensteuerung (110) in dem Flugzeug entfernt von der Vielzahl von lokalen Sitzsteuerungen positioniert ist.

10. Verfahren zur Überwachung von Positionen einer bewegbaren Sitzkomponente in einer Flugzeugfahrgastkabine, beinhaltend eine Vielzahl von lokalen Sitzsteuerungen, die jeweils mit einem Sitz verknüpft und kommunikativ mit mindestens einem Aktuator gekoppelt sind, der mechanisch mit mindestens einer bewegbaren Sitzkomponente gekoppelt ist, wobei das Verfahren die folgenden Schritte umfasst:
Empfangen, von jeder der Vielzahl von lokalen Sitzsteuerungen, von Positionsinformationen von dem mindestens einen Aktuator, die für Positionsinformationen der mindestens einen bewegbaren Sitzkomponente bestimmend sind;
Empfangen einer aktuellen Flugphase von einem Flugphasenwähler; Bestimmen, für jeden Sitz, anhand der von dem mindestens einen Aktuator empfangenen Positionsinformationen und der empfangenen aktuellen Flugphase der Vorschriftsmäßigkeit oder Nichtvorschriftsmäßigkeit einer Position des bewegbaren Sitzes;
für jeden Sitz, aufweisend eine als nicht vorschriftsmäßig bestimmte bewegbare Sitzkomponente, Anweisen der jeweiligen lokalen Sitzsteuerung, den mindestens einen Aktuator zu betätigen, um die mindestens eine bewegbare Sitzkomponente zu bewegen, um eine vorschriftsmäßige Sitzkomponentenposition zu erreichen;
wobei das Verfahren durch eine Kabinensteuerung durchgeführt wird, die kommunikativ mit einer Vielzahl von lokalen Sitzsteuerungen gekoppelt ist, wobei die Kabinensteuerung eine interaktive digitale Anzeige, einen Speicher und einen Prozessor beinhaltet, wobei eine Tabelle in dem Speicher der Kabinensteuerung gespeichert ist und Informationen über vorschriftsmäßige Sitzkomponentenpositionen, die Flugphasen entsprechen, beinhaltet und der Prozessor eine Verarbeitungsschaltung beinhaltet, die konfiguriert ist, um maschinenlesbare Anweisungen, die in einem nichtflüchtigen computerlesbaren Medium gespeichert sind, auszuführen; und
wobei das Verfahren ferner Folgendes umfasst:
Erfassen eines Belegungszustands des jeweiligen Sitzes;
Bestimmen an der lokalen Steuerung des Sitzes, ob der Sitz belegt oder nicht belegt ist; und
**dadurch gekennzeichnet, dass** eine Bewegung der mindestens einen bewegbaren Sitzkomponente, wenn bestimmt ist, dass der Sitz belegt ist, bei einer langsameren Rate erfolgt, als wenn bestimmt ist, dass der Sitz nicht belegt ist.

## Revendications

1. Système de surveillance de sièges dans un aéronef, comprenant :
une pluralité de sièges (104a, 104b, ...,104n) ;
une pluralité de contrôleurs de sièges locaux (102a, 102b,...,102n), chaque contrôleur de siège local étant associé à un siège respectif (104a, 104b,...,104n) de la pluralité de sièges et relié de manière communicative à au moins un actionneur (106) lui-même relié mécaniquement à au moins un composant mobile du siège (108) ; et
un contrôleur de cabine (110) relié de manière communicative à la pluralité de contrôleurs de sièges locaux, le contrôleur de cabine comportant un affichage numérique interactif (112), une mémoire (114) et un processeur (116), dans lequel :
un tableau (118) est stocké dans la mémoire du contrôleur de cabine et comporte des informations relatives aux positions des composants de sièges conformes, correspondant aux phases de vol ; et
le processeur comporte des circuits de traitement configurés pour exécuter des instructions lisibles par machine stockées sur un support non transitoire lisible par ordinateur, dans lequel les instructions, lorsqu'elles sont exécutées par les circuits de traitement, amènent ces derniers à :
recevoir, de chacun de la pluralité de contrôleurs de sièges locaux, des informations de position provenant du au moins un actionneur déterminant les informations de position du au moins un composant de siège mobile ;
recevoir, d'un sélecteur de phase de vol, une phase de vol actuelle ;
déterminer pour chaque siège, à partir des informations de position reçues du au moins un actionneur et de la phase de vol actuelle reçue, la conformité ou la non-conformité de la position du siège mobile ;
faire en sorte que l'affichage numérique interactif affiche pour chaque siège la conformité ou la non-conformité déterminée du composant mobile du siège ; et
pour chaque siège comportant un composant mobile jugé non conforme, indiquer, par l'intermédiaire de l'affichage numérique interactif, au contrôleur de sièges local respectif d'actionner le au moins un actionneur pour déplacer le au moins un composant mobile du siège afin d'obtenir une position conforme du composant de siège ;
dans lequel :
chaque siège (104a, 104b,...,104n) comporte au moins un capteur (122) configuré pour détecter l'état d'occupation du siège respectif ;
le contrôleur de sièges local est relié de manière communicative à le au moins un capteur et est configuré pour déterminer l'état d'occupation du siège ; et
**caractérisé en ce que** le mouvement du au moins un composant mobile du siège, lorsque le siège est considéré comme occupé,
se produit à un rythme plus lent que lorsque le siège est considéré comme inoccupé.

2. Système selon la revendication 1, dans lequel :
le contrôleur de sièges local est configuré pour signaler l'état d'occupation déterminé au contrôleur de cabine.

3. Système selon la revendication 2, dans lequel l'écran numérique interactif (112) est configuré pour :
afficher un plan des sièges (104a, 104b,...,104n) dans l'aéronef ;
afficher le au moins un composant de siège mobile (108) pour chaque siège ; et
différencier graphiquement les positions des composants mobiles des sièges conformes et non conformes.

4. Système selon une quelconque revendication précédente, dans lequel les phases de vol comportent au moins deux des phases suivantes : pré-vol, roulage, décollage, montée, croisière, descente, approche, atterrissage, roulage et post-vol.

5. Système selon une quelconque revendication précédente, dans lequel le au moins un composant de siège mobile comporte au moins un d'un dossier et d'un repose-jambes.

6. Système selon une quelconque revendication précédente, dans lequel chaque siège est un siège passager individuel ou un divan, et, éventuellement, dans lequel au moins un des sièges est un siège passager individuel et au moins un des sièges est un divan.

7. Système selon une quelconque revendication précédente, dans lequel le circuit de traitement (116) du contrôleur de cabine (110) est en outre configuré pour émettre une alerte, diffusée par l'affichage numérique interactif, lorsque le au moins un composant mobile du siège est jugé non conforme.

8. Système selon une quelconque revendication précédente, dans lequel le circuit de traitement (116) du contrôleur de cabine (110) est en outre configuré pour ordonner à la pluralité de contrôleurs de sièges locaux d'actionner leur au moins un actionneur respectif afin de déplacer leur au moins un composant de siège mobile respectif vers une position par défaut prédéfinie attribuée à une phase prédéfinie des phases de vol, et éventuellement dans lequel la position par défaut prédéfinie pour chaque siège est personnalisable.

9. Système selon une quelconque revendication précédente, dans lequel le contrôleur de cabine (110) est positionné dans l'aéronef à distance de la pluralité de contrôleurs de sièges locaux.

10. Procédé de surveillance des positions des composants mobiles des sièges dans une cabine passagers d'un aéronef, comportant une pluralité de contrôleurs de sièges locaux, chacun associé à un siège et relié de manière communicative à au moins un actionneur lui-même relié mécaniquement à au moins un composant mobile de siège, le procédé comprenant les étapes suivantes :
la réception, de chacun de la pluralité de contrôleurs de sièges locaux, d'informations de position provenant du au moins un actionneur déterminant les informations de position du au moins un composant de siège mobile ;
la réception, d'un sélecteur de phase de vol, d'une phase de vol actuelle ;
la détermination pour chaque siège, à partir des informations de position reçues du au moins un actionneur et de la phase de vol actuelle reçue, de la conformité ou de la non-conformité de la position du siège mobile ;
pour chaque siège comportant un composant mobile jugé non conforme, l'indication au contrôleur de sièges local respectif d'actionner le au moins un actionneur pour déplacer le au moins un composant mobile du siège afin d'obtenir une position conforme du composant de siège ;
dans lequel le procédé est mis en œuvre par un contrôleur de cabine relié de manière communicative à la pluralité de contrôleurs de sièges locaux, le contrôleur de cabine comportant un affichage numérique interactif, une mémoire et un processeur,
dans lequel un tableau est stocké dans la mémoire du contrôleur de cabine et comporte des informations relatives aux positions des composants de siège conformes correspondant aux phases de vol, et le processeur comporte des circuits de traitement configurés pour exécuter des instructions lisibles par machine stockées sur un support non transitoire lisible par ordinateur ; et
dans lequel le procédé comprend en outre :
la détection d'un état d'occupation du siège respectif ;
la détermination auprès du contrôleur local du siège si celui-ci est occupé ou inoccupé ; et
**caractérisé en ce que** le mouvement du au moins un composant mobile du siège, lorsque le siège est considéré comme occupé, se produit à un rythme plus lent que lorsque le siège est considéré comme inoccupé.
